Europäisches Patentamt

European Patent Office

Office européen des brevets

(11) Veröffentlichungsnummer : **0 362 125 B1**

(12) **EUROPÄISCHE PATENTSCHRIFT**

(45) Veröffentlichungstag der Patentschrift :
**21.10.92 Patentblatt 92/43**

(21) Anmeldenummer : **89810592.9**

(22) Anmeldetag : **07.08.89**

(51) Int. Cl.⁵ : **B09B 3/00,** B03B 9/04, C22B 7/02

(54) **Verfahren zur Behandlung von schwermetallhaltigen Feststoffrückständen aus Verbrennungsanlagen.**

(30) Priorität : **28.09.88 CH 3605/88**

(43) Veröffentlichungstag der Anmeldung :
**04.04.90 Patentblatt 90/14**

(45) Bekanntmachung des Hinweises auf die
Patenterteilung :
**21.10.92 Patentblatt 92/43**

(84) Benannte Vertragsstaaten :
**AT BE DE ES FR GB IT LU NL SE**

(56) Entgegenhaltungen :
**EP-A- 0 278 282
CH-A- 585 062
DE-A- 3 145 220
DE-A- 3 626 885
DE-A- 3 707 261
GB-A- 1 435 296**

(73) Patentinhaber : **GEBRÜDER SULZER
AKTIENGESELLSCHAFT
Zürcherstrasse 9
CH-8401 Winterthur (CH)**

(72) Erfinder : **Gmünder, Arnold
Schwalbenweg 3
CH-8472 Seuzach (CH)**
Erfinder : **Gnieser, Jürgen
Dachslenstr. 9
CH-8048 Zürich (CH)**
Erfinder : **Wiedersheim, Jörg
Sonnhalde 4
CH-8602 Wangen (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 125 B1

**Beschreibung**

Die Erfindung betrifft ein Verfahren zur Behandlung von schwermetallhaltigen Feststoff-Rückständen aus Verbrennungsanlagen, bei welchem die Rückstände mit Wasser oder wässriger Waschflüssigkeit gewaschen, davon wieder getrennt, entwässert und mit Zusatzstoffen deponiefähig gemacht werden, wobei die Schwermetalle aus den Rückständen mindestens teilweise in Lösung gehen, aus der Lösung ausgefällt, vom Lösungsmittel getrennt, ebenfalls mit Zusatzstoffen aufbereitet und in unlöslicher Form in einer Deponie abgelagert werden.

Bekanntlich enthalten Feststoff-Rückstände, also Aschen, aus Verbrennungsanlagen - insbesondere aus Kehricht-Sondermüllverbrennungsanlagen, Sinteranlagen, thermischen Kraftwerken und Industrieverbrennungsanlagen - Schwermetalle wie beispielsweise Kadmium (Cd), Blei (Pb), Zink (Zn), Quecksilber (Hg), Nickel (Ni) oder Kupfer (Cu). Diese Schwermetalle müssen aus den Rückständen entfernt werden, ehe diese - nach einer Aufbereitung mit Zusatzstoffen, beispielsweise mit Bindemitteln, wie Beton oder Bitumen - in einer Deponie abgelagert werden. Es sind daher Verfahren der vorstehend genannten Art bekannt, um Schwermetalle mindestens weitestgehend aus den Feststoffen-Rückständen zunächst durch Auflösen und anschliessendes Ausfällen, beispielsweise durch die Zugabe von Hydroxiden oder Sulfiden zu entfernen, in eine durch Wasser oder saure Lösungen nicht lösliche Form zu bringen und ebenfalls mit Bindemitteln aufzubereiten, ehe sie - wie die von ihnen befreiten Feststoff-Rückstände - in einer Deponie abgelagert werden.

Bei diesem bekannten Verfahren erfolgt die Trennung der ausgefällten, unlöslichen Schwermetall-Konzentrate von ihren flüssigen Lösungsmitteln bisher in Festbettfiltern mit körnigen Filtermaterialien. Dabei ist es bisher üblich, den Schlamm mit den ausgefällten Schwermetallen und die ursprünglichen Feststoff-Rückstände getrennt zu entwässern und in Deponien zu entsorgen, wobei der Schwermetallschlamm sehr häufig in Sondermülldeponien abgelagert werden muss.

Immer rigorosere Vorschriften über die maximal zulässigen Schwermetall-Konzentrationen im Abwasser derartiger Waschanlagen für Aschen ergeben in den bekannten Anlagen bei der Trennung von ausgefällten Schwermetallen von ihrem "Waschwasser" Schwierigkeiten, da die "Trennschärfe" der bisher dabei eingesetzten Filter nicht mehr ausreichend ist.

Eine Aufgabe der vorliegenden Erfindung besteht daher darin, die "Trennleistung" bei der Abscheidung der ausgefällten Schwermetalle zu verbessern. Gleichzeitig ist es weiteres Ziel der Erfindung, Verfahren und Anlagen für die Entfernung von Schwermetallen aus Feststoff-Rückständen von Verbrennungsanlagen zu vereinfachen.

Mit der Erfindung wird diese doppelte Aufgabe dadurch gelöst, dass die ausgefällten, schwermetallhaltigen Feststoffe in einer Querstrom-Membranfiltration vom Lösungsmittel getrennt werden, und dass ferner die Feststoffe aus der Filtration durch Sedimentation aufkonzentriert und gemeinsam mit denjenigen aus der Rückstandswaschung entwässert und durch Zugabe von Zusatzstoffen deponiefähig gemacht werden.

Der Einsatz einer an sich bekannten Querstrom-Membranfiltration für die Trennung von Waschwasser und ausgefällten Schwermetallsalzen, ermöglicht - durch Auswahl geeigneter Filtermembranen - die Konzentration an Schwermetallen im "Waschwasser"-Filtrat praktisch beliebig zu verringern. Die gemeinsame Entwässerung und Behandlung bis zur Deponiefähigkeit der beiden bei dem Verfahren anfallenden Feststoff-Anteile vereinfachen die Behandlung von schwermetallhaltigen Asche-Rückständen erheblich.

Mit Vorteil wird der Anteil der Feststoffe in dem Sedimentations-Schlamm-Konzentrat auf 2 - 20 % G/V (Gewichtsprozent pro Volumeneinheit) aufkonzentriert. Weiterhin hat sich für die Sedimentation besonders bewährt, wenn das zu sedimentierende Feststoff/Flüssigkeits-Gemisch im Aufwärts- oder Abwärtsstrom durch schraubenförmig verlaufende, in konzentrischen Zylinderrohren angeordnete Lamellen einer runden Absetzeinrichtung geleitet wird.

Unter Umständen kann es zweckmässig sein, wenn den zu entwässernden Feststoffen Nachfällungs-Chemikalien, z.B. Flokkungshilfsmittel, wie Polyelektrolyte, zudosiert werden.

Schliesslich lässt sich in der Wasserbedarf bei dem neuen Verfahren erheblich verringern, wenn die Flüssigkeit aus der Rückstandsentwässerung und/oder das Filtrat als Waschflüssigkeit in die Rückstandswaschung eingespeist werden.

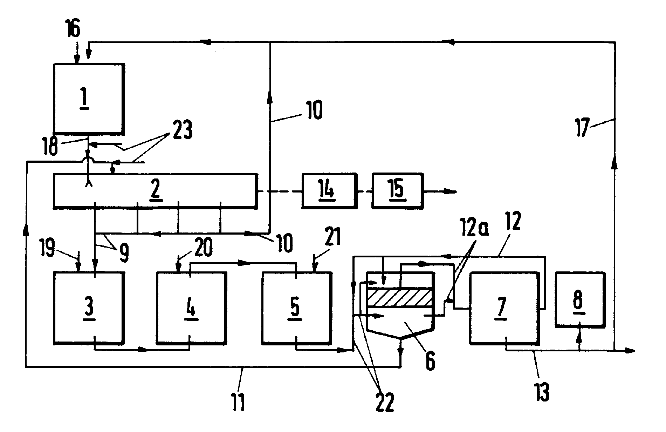

Im folgenden wird die Erfindung anhand eines Ausführungsbeispiels im Zusammenhang mit der Zeichnung näher erläutert.

Die einzige Figur zeigt ein Fliessschema einer Anlage zur Durchführung des Verfahrens.

Im nachfolgenden Ausführungsbeispiel wird die Flugasche einer Kehrichtverbrennungsanlage behandelt, um ihren Schwermetall-Inhalt in der Form von in Wasser oder saurem Medien löslichen Verbindungen mindestens weitgehend in einem solchen überzuführen, bei dem die Verbindungen der Schwermetalle in den genannten Lösungsmittel unlöslich sind.

Die Flugasche wird in einer Ascheaufbereitung 1 mit Wasser (Zugabestelle 16) versetzt, das, wie die Figur

2

zeigt zum Teil aus gereinigtem Abwasser des Verfahrens selbst bestehen kann (Leitungen 10 und 17). Im Anlagenteil 1 werden die im Wasser löslichen Schwermetallverbindungen ausgewaschen; die aus der Lösung und den unlöslichen Feststoff-Rückständen bestehende Suspension fliesst nun über eine Leitung 18 einer Entwässerungsmaschine 2, beispielsweise einem Vakuum-Bandfilter, zu, in der die Suspension entwässert und gegebenenfalls mehrfach gespült wird. Die gewaschenen Feststoff-Rückstände verlassen die Entwässerungsmaschine 2 als Filterkuchen, werden in einem Zwischenlager 14 gesammelt, durch Zugabe von Bindemitteln, wie beispielsweise Beton oder Bitumen, im Bereich 15 der Anlage verfestigt und deponiefähig gemacht, ehe sie einer "normalen Deponie zugeführt werden.

Das mit gelösten Schwermetallen verunreinigte, aus der Entwässerungsmaschine 2 kommende Waschwasser wird in einer Kollektorleitung 9 gesammelt und einem Puffer/Neutralisationsbehälter 3 zugeleitet, in dem durch Zugabe (Einspeisung 19) von Kalkhydrat (Ca OH$_2$) oder Natronlauge (Na OH) eine erste $p_H$-Korrektur auf einen $p_H$-Wert von 7,5 bis 8,5 erfolgt. Sind die Schwermetallverunreinigungen des Waschwassers relativ gering, so kann ein Teil dieses Waschwassers, wie bereits erwähnt, über die Leitung 10 in die Ascheaufbereitung oder Rückstandswaschung 1 direkt zurückgeführt werden.

Aus der Neutralisation 3 gelangt das Waschwasser in einen Flockungsreaktor 4, indem ein Teil der Schwermetalle als Hydroxid ausfallen und weiterhin durch Zugabe von Kalkhydrat oder Natronlauge (Einspeisung 20) der $p_H$-Wert auf die spezifischen Metallverunreinigungen der "individuellen" Asche abgestimmt wird; im vorliegenden Fall wird dieser $p_H$-Wert - für die in der behandelten Flugasche vorkommenden, in der Tabelle am Ende der Beschreibung angegebenen Metalle - auf 9,3 eingestellt. Aus dem Flockungsreaktor 4 fliesst das Waschwasser zusammen mit den bereits suspendierten Feststoffen in eine Fällungsstufe 5. In dieser wird ihm als Fällungsmittel eine unter dem Handelsnamen "TMT 15" bekannte wässrige Lösung von Trimercapto-s-triazintrinatrium-Salz zugegeben (Einspeisung 21). Die Menge des Fällungsmittels richtet sich nach dem Ausfällen der Schwermetalle im Waschwasser auch zulässigen Schwermetallkonzentrationen; im vorliegenden Fall beträgt die Menge an 15 Gewichts-% TMT-Lösung 50 ml pro m$^3$ Waschwasser. Aus dem Fällungsreaktor 5 gelangt das Schlamm/Wassergemisch über eine Leitung 22 in eine Sedimentationsstufe 6, die vorteilhafterweise in einer Absetzeinrichtung nach der CH-PS 585 062 bestehen.

Die noch mit unlöslichen Schwermetallverbindungen durchsetzte, flüssige Phase aus dem Sedimentationsbehälter 6 fliesst einer bekannten Anordnung für eine Querstrom-Membranfiltration 7 zu, in der die Flüssigkeit einer Vielzahl von schlauchförmigen Membranen durchströmt und durch einen Ueberdruck quer zu ihrer Strömungsrichtung durch die Membranen gepresst wird, wodurch eine sehr weitgehende Trennung von gereinigter Flüssigkeit und festen Schlammpartikeln erfolgt. Ueber die Leitungen 12 und 12a sind der Behälter und die Filtrationsstufe 7 zu einen Zirkulationssystem verbunden, so dass die Flocken durchsetzte Flüssigkeit Filtration 7 und Sedimentation 6 mehrfach durchströmt, wobei die Anordnung der Verbindungsleitungen 12 und 12a vom Sedimentationsbehälter zur Querstrommembranfiltration und zurück so ausgeführt werden kann, dass die Sedimentation 6 entweder im Aufwärts- oder im Abwärtsstrom beschickt wird.

Für das Filtrat aus der Stufe 7, das aus weitgehend gereinigtem Abwasser besteht, sind drei verschiedene Verwendungsmöglichkeiten dargestellt: Ein Eindampfen in einem Verdampfer 8, die bereits erwähnte Rückführung in die Aschenaufbereitung oder Rückstandswaschung 1 über die Leitung 17 und ein Abfliessen in die Kanalisation durch die Leitung 13.

Dem Schlammabzug des Sedimentationsbehälters 6 verbindet eine Leitung 11 mit der Eingangsseite der Entwässerungsmaschine 2; über diese Leitung 11 wird der sedimentierte und zu einer Konzentration von 8 % G/V (Gewichtsprozent pro Volumeneinheit) an Feststoffen aufkonzentrierte Schwermetallschlamm zur weiteren gemeinsamen Entwässerung und Behandlung mit den Feststoff-Rückständen aus der Rückstandswaschung 1 in die Entwässerungsmaschine 2 zurückgeführt.

Falls erforderlich können über Einspeisestelle 23 den zu entwässernden Schlammsuspensionen, beispielsweise in den Leitungen 18 und 11, Flockungshilfsmittel, beispielsweise Polyelektrolyte, zugegeben werden.

Die Wirksamkeit des neuen Verfahrens verdeutlicht nachstehende Tabelle in der die Konzentrationen einiger Elemente, vor allem von Schwermetallen, im Waschwasser am Eingang in die Behandlungsanlage, also in der Leitung 18, und am Ausgang, d.h. in der Leitung 13 wiedergegeben werden:

EP 0 362 125 B1

| Element | Konzentration in ppm | |
|---|---|---|
| | Leitung 18 | Leitung 13 |
| Cd | 14 | 0,1 |
| Pb | 44 | 0,2 |
| Zn | 40 | 0,34 |
| Hg | 0,4 | 0,002 |
| Ni | 1,8 | 0,5 |
| Cu | 0,4 | 0,2 |
| Cl | 32 000 | 32 000 |

**Patentansprüche**

1. Verfahren zur Behandlung von schwermetallhaltigen Feststoff-Rückständen aus Verbrennungsanlagen, bei welchem die Rückstände mit Wasser oder wässriger Waschflüssigkeit gewaschen, davon wieder getrennt, entwässert und mit Zusatzstoffen deponiefähig gemacht werden, wobei die Schwermetalle aus den Rückständen mindestens teilweise in Lösung gehen, aus der Lösung ausgefällt, vom Lösungsmittel getrennt, ebenfalls mit Zusatzstoffen aufbereitet und in unlöslicher Form in einer Deponie abgelagert werden, dadurch **gekennzeichnet,** dass die ausgefällten, schwermetallhaltigen Feststoffe in einer Querstrom-Membranfiltration (7) vom Lösungsmittel getrennt werden, und dass ferner die Feststoffe (11) aus der Filtration (7) durch Sedimentation (6) aufkonzentriert und gemeinsam mit denjenigen aus der Rückstandswaschung (1) entwässert (2) und durch Zugabe von Zusatzstoffen deponiefähig gemacht werden (15).

2. Verfahren nach Anspruch 1, dadurch gekennzeichnet, dass der Anteil der Feststoffe in dem Sedimentations-Schlamm-Konzentrat auf 2 bis 20 % G/V (Gewichtsprozent pro Volumeneinheit) aufkonzentriert wird.

3. Verfahren nach Anspruch 1 oder 2, dadurch gekennzeichnet, dass das zu sedimentierende Feststoff/Flüssigkeits-Gemisch im Aufwärts- oder Abwärtsstrom durch schraubenförmig verlaufende, in konzentrischen Zylinderrohren angeordnete Lamellen einer runden Absetzeinrichtung (6) geleitet wird.

4. Verfahren nach einem der Ansprüche 1 bis 3, dadurch gekennzeichnet, dass den zu entwässernden Feststoffen Nachfällungs-Chemikalien zudosiert werden (23).

5. Verfahren nach einem der Ansprüche 1 bis 4, dadurch gekennzeichnet, dass die Flüssigkeit (10) aus der Rückstandsentwässerung (2) und/oder das Filtrat (17) als Waschflüssigkeit in die Rückstandswaschung (1) eingespeist werden.

**Claims**

1. A method of treating solid residues containing heavy metals from combustion plants, in which method the residues are washed with water or aqueous washing liquid, separated therefrom, dewatered and made suitable for dumping by means of additives, the heavy metals from the residues going at least partly into solution and being precipitated from solution, separated from the solvent, likewise processed with additives, and deposited in insoluble form in a dump, characterised in that the precipitated solids containing heavy metals are separated from the solvent in a cross-current diaphragm filtration unit (7), and the solids (11) from the filtration unit (7) are concentrated by sedimentation (6), dewatered (2) together with the solids from the residue-washing unit (1), and treated with additives so as to be made suitable for dumping

4

EP 0 362 125 B1

(15).

2. A method according to claim 1, characterised in that the proportion of solids in the concentrated sedimentation sludge is concentrated to 2 to 20% W/V (= percentage by weight per unit volume).

3. A method according to claim 1 or 2, characterised in that the solid/liquid mixture for sedimentation is conveyed in an upward or downward stream through helical fins, ribs or the like, disposed in concentric cylindrical tubes, in a round settling device (6).

4. A method according to any of claims 1 to 3, characterised in that re-precipitation chemicals are added (23) to the solids for dewatering.

5. A method according to any of claims 1 to 4, characterised in that the liquid (10) from the residue dewatering unit (2) and/or the filtrate (17) is supplied as washing liquid to the residue washing unit (1).

**Revendications**

1. Procédé de traitement de résidus solides contenant des métaux lourds et provenant d'incinérateurs, suivant lequel les résidus sont lavés à l'eau ou par un liquide aqueux de lavage, en sont séparés, débarrassés de l'eau et rendus aptes à être mis en décharge à l'aide d'additifs, les métaux lourds des résidus entrant au moins partiellement en solution, étant précipités de la solution, séparés du solvant, également traités par des additifs et déposés sous forme insoluble dans une décharge, caractérisé en ce que les substances solides précipitées, contenant des métaux lourds, sont séparées du solvant par une filtration (7) à courant transversal à travers une membrane et en ce que par ailleurs les substances solides (11) provenant de la filtration (7) sont concentrées par sédimentation (6) et débarrassées de l'eau en (2) en commun avec celles provenant du lavage (1) des résidus, puis sont rendues aptes en (15) à être mises à la décharge par addition d'additifs.

2. Procédé selon la revendication 1, caractérisé en ce que la proportion des substances solides du concentré de boue de sédimentation subit une concentration à 2 - 20 % en P/V (pourcent en poids par unité de volume).

3. Procédé selon la revendication 1 ou 2, caractérisé en ce que le mélange de substances solides/liquide devant subir la sédimentation est dirigé vers un dispositif circulaire de décantation (6) en un courant ascendant ou descendant par des lamelles hélicoïdales disposées dans des tubes cylindriques concentriques.

4. Procédé selon l'une des revendications 1 à 3, caractérisé en ce que les substances solides devant subir une élimination d'eau sont additionnées en quantité dosée (23) de produits chimiques de reprécipitation.

5. Procédé selon l'une des revendications 1 à 4, caractérisé en ce que le liquide (10) provenant du poste (2) d'élimination d'eau des résidus et/ou le filtrat (17) sont envoyés sous forme de liquide de lavage dans le positif (1) de lavage des résidus.

5